# DEMANDE DE BREVET EUROPEEN

(11) **EP 1 944 356 A1**
(43) Date de publication de la demande: **16.07.2008**
(21) Numéro de dépôt: 08100140.6
(22) Date de dépôt: 07.01.2008
(51) Int. Cl.: C12C 13/02

(54) **Procédé et installation de chauffage de produit de brasserie**

(30) Priorité: 11.01.2007 BE 200700011
(71) Demandeur: MEURA, 7600 Péruwelz (BE)
(72) Inventeur: CANTILLON, Pascal, André, Francis, Ghislain, 7531 Havinnes (BE)
(74) Mandataire: Claeys, Pierre

(57) **Abrégé**

Procédé de chauffage de produit de brasserie, comprenant une injection de vapeur d'eau à l'intérieur du produit de brasserie à traiter au travers d'au moins une perforation d'au moins un dispositif d'injection, et un arrêt de ladite injection, lorsque le produit de brasserie a atteint une température prédéterminée, caractérisé en ce qu'il comprend en outre, avant ladite injection, un remplissage dudit au moins un dispositif d'injection par un milieu fluide, en début d'injection, une purge initiale dudit milieu fluide hors de chaque dispositif d'injection par de la vapeur d'eau, par ouverture d'une dérivation permettant un passage de fluide entre le dispositif d'injection et la cuve, et une fermeture de chaque dérivation quand ledit au moins un dispositif d'injection est purgé.

## Description

La présente invention est relative à un procédé de chauffage de produit de brasserie, comprenant
- une injection de vapeur d'eau à l'intérieur du produit de brasserie à traiter au travers d'au moins une perforation d'au moins un dispositif d'injection, et
- un arrêt de ladite injection, lorsque le produit de brasserie a atteint une température prédéterminée.

L'invention concerne en particulier le chauffage, comme produit de brasserie à chauffer, d'une maische, de façon à atteindre différents paliers de travail des enzymes, d'un moût de brasserie, afin d'atteindre l'ébullition, d'extraits de malt, de produits de distillerie, etc.

Actuellement, le chauffage de ces produits se fait dans des cuves munies d'un agitateur et d'une enveloppe externe dans laquelle circule de la vapeur d'eau. Pour ce type de chauffage, une agitation du produit de brasserie est critique, car elle doit assurer l'homogénéité et le transfert de chaleur depuis la paroi chauffante. Cependant, cette technologie (voir par exemple BE-376066) présente plusieurs inconvénients. La forte agitation requise a pour effet un cisaillement des particules du produit et une oxydation de celui-ci qui conduit à la formation d'un gel, ce qui entraîne des difficultés lors de la filtration ultérieure. La paroi de la cuve au niveau de l'enveloppe externe est sujette à un encrassement à chaque fonctionnement, ce qui a pour effet une réduction rapide du coefficient de transfert thermique. Il en résulte que la cuve doit être fréquemment nettoyée (après 15 brassages), ce qui diminue le rendement de l'installation. Il en résulte aussi une hétérogénéité du produit obtenu, en fonction de l'état d'encrassement des parois, puisque le transfert thermique n'est pas constant en fonction du temps.

Pour porter remède à ces problèmes, on a déjà prévu un procédé de chauffage de produit de brasserie tel qu'indiqué au début. La demanderesse met sur le marché, sous la dénomination commerciale de AflosJet, un dispositif permettant de mettre en oeuvre un tel procédé de chauffage par injection de vapeur propre directement dans le produit. Pour ce faire on fait appel à des injecteurs en forme de tuyères. Il est apparu toutefois que ce type d'appareillage occasionne encore des forces de cisaillement importantes qui peuvent compromettre la filtration ultérieure et que l'encrassement des tuyères donne lieu finalement à une obstruction plus ou moins rapide de celles-ci.

Selon la demande de brevet non encore publiée n° EP 06117940.4, on a prévu dans un procédé tel qu'indiqué au début d'obturer ladite au moins une perforation avant ou simultanément à l'arrêt de l'injection. Par l'obturation de la ou des perforations de chaque dispositif d'injection, avant ou pendant l'arrêt de l'injection, il n'existe plus, dans ou derrière le dispositif d'injection, aucun volume rempli de vapeur qui soit en communication directe avec le contenu de la cuve. La vapeur, qui est enfermée dans le dispositif d'injection, ne peut plus, en se condensant, provoquer un vide dans lequel pourrait venir s'engouffrer le produit de brasserie à traiter, ce qui garantit la propreté des dispositifs d'injection.

II est toutefois apparu que l'application de cette technologie ne permet pas de résoudre parfaitement le problème d'obturation des dispositifs d'injection de vapeur par les particules insolubles du produit de brasserie, du moins aux tailles des perforations utilisées pour obtenir une bonne homogénéisation de la vapeur d'eau dans le produit.

La présente invention a pour but de mettre au point un procédé et une installation de chauffage de produit de brasserie qui permettent d'éviter les inconvénients précités, en empêchant l'obturation des perforations des dispositifs d'injection tout en maintenant une capacité de chauffe efficace.

On a résolu ces problèmes par un procédé tel qu'indiqué au début, qui comprend en outre
- avant ladite injection, un remplissage dudit au moins un dispositif d'injection par un milieu fluide,
- en début d'injection, une purge initiale dudit milieu fluide hors de chaque dispositif d'injection par de la vapeur d'eau, par ouverture d'une dérivation permettant un passage de fluide entre le dispositif d'injection et la cuve, et
- une fermeture de chaque dérivation quand ledit au moins un dispositif d'injection est purgé.
Ce procédé présente l'avantage de nettoyer l'intérieur du dispositif d'injection par un milieu fluide chassé du dispositif d'injection par de la vapeur d'eau. Par cette purge, les particules insolubles qui sont accumulées dans les dispositifs d'injection sont ainsi éliminées de l'intérieur de ceux-ci et en particulier des perforations. Quand les dérivations sont fermées, la vapeur d'eau peut pénétrer dans le produit de brasserie au travers de perforations bien nettoyées.

Suivant un mode de réalisation de l'invention le procédé comprend en outre à l'arrêt susdit de ladite injection ou après celui-ci, un nouveau remplissage dudit au moins un dispositif d'injection par ledit milieu fluide. Avantageusement, le milieu fluide susdit est liquide. II peut s'agir de produit de brasserie et ledit remplissage est effectué par ouverture, à chaque dispositif d'injection, de ladite dérivation. A l'ouverture des dérivations, les dispositifs d'injection se remplissent du produit à chauffer puisqu'ils sont en communication directe, par les dérivations, avec le contenu de la cuve. En remplissant après chaque injection de vapeur d'eau l'intérieur des dispositifs d'injection par le produit liquide à traiter, il n'y a pas de possibilité de condensation de vapeur d'eau dans ceux-ci, et on évite dans le dispositif d'injection la création d'un vide qui attirerait des particules solides depuis la cuve dans ladite au moins une perforation. On peut par la même occasion renoncer à un dispositif complexe d'obturation des perforations depuis l'intérieur des dispositifs d'injection.

Suivant une autre forme de réalisation de l'invention, le milieu fluide susdit est de l'eau, ledit remplissage est effectué par ouverture, à chaque dispositif d'injection, d'une alimentation en eau, pendant que ladite dérivation est fermée, et la purge initiale a lieu après fermeture de l'alimentation en eau. Selon encore une autre variante de l'invention le milieu fluide est un mélange de produit de brasserie et d'eau, le remplissage est effectué par ouverture, à chaque dispositif d'injection, de ladite dérivation et d'une alimentation en eau, et la purge initiale a lieu après fermeture de l'alimentation en eau. Un nouveau remplissage des dispositifs d'injection, à l'arrêt de l'injection de vapeur ou après celle-ci, peut être effectué par de l'eau ou un mélange d'eau et de produit de brasserie, comme indiqué ci-dessus.

Le milieu liquide peut évidemment être tout autre liquide approprié dans les conditions de traitement du produit de brasserie. Il peut aussi s'agir d'un gaz ou d'un mélange gazeux, par exemple de CO₂, une alimentation en ce gaz ou mélange gazeux étant alors prévue à chaque dispositif d'injection.

Suivant un mode de réalisation avantageux de l'invention, après l'arrêt susdit de ladite injection de vapeur d'eau, le procédé comprend, à au moins une reprise, les étapes suivantes :
un maintien du produit de brasserie chauffé à un palier de température correspondant sensiblement à ladite température prédéterminée pendant une période de temps, puis,
après le remplissage susdit de chaque dispositif d'injection, une injection supplémentaire de vapeur d'eau dans le produit de brasserie, avec une purge initiale susdite de chaque dispositif d'injection, et
un arrêt de l'injection supplémentaire à une température plus élevée que ladite température prédéterminée.
On peut ainsi traiter de manière adéquate des maisches qui doivent atteindre successivement des paliers de température de plus en plus élevés pour favoriser le travail de différentes enzymes.

La vapeur d'eau injectée a été bien entendu préalablement épurée, par exemple en ayant fait subir à l'eau un adoucissement sur des résines échangeuses d'ions, une osmose inverse, puis une désaération et un chauffage de façon à obtenir une vapeur d'eau à basse pression de l'ordre de 0,2 à 4 bar, de préférence de 0,2 à 2 bar. La vapeur d'eau injectée peut aussi être simplement épurée par filtration mécanique.

La présente invention a également pour objet une installation de chauffage de produit de brasserie, comprenant
- une cuve contenant le produit de brasserie à chauffer,
- au moins une source de vapeur d'eau située à l'extérieur de la cuve,
- au moins un dispositif d'injection alimenté en vapeur d'eau par ladite au moins une source de vapeur d'eau et pourvu d'au moins une perforation à travers laquelle la vapeur d'eau alimentée au dispositif d'injection est injectée dans le produit de brasserie à chauffer, et
- au moins un organe d'arrêt qui, en position d'ouverture, autorise un passage de vapeur d'eau d'au moins une source de vapeur d'eau à au moins un dispositif d'injection et qui, en position de fermeture, arrête ce passage.

Suivant l'invention, chaque dispositif d'injection comprend en outre
- une dérivation mettant en communication celui-ci et la cuve, et
- un organe de blocage de chaque dérivation
   qui, en position ouverte, autorise un passage de milieu liquide entre la cuve et le dispositif d'injection correspondant et inversement, et
   qui, en position fermée, empêche ce passage.

Suivant une forme de réalisation de l'invention, au moins un dispositif d'injection susdit comporte un tube qui, à l'extérieur de la cuve, présente une partie externe en communication avec ladite source de vapeur d'eau et qui, à l'intérieur de la cuve, présente une partie interne pourvue d'une première extrémité en communication avec ladite partie externe, cette partie interne présentant ladite au moins une perforation et ayant une forme de boucle qui est en communication avec ladite dérivation. Avantageusement, ladite partie interne du tube du dispositif d'injection est pourvue d'une deuxième extrémité opposée à ladite première extrémité, qui débouche vers l'extérieur de la cuve et ladite dérivation est agencée à l'extérieur de la cuve de manière à mettre en communication cette deuxième extrémité et l'intérieur de la cuve.

D'autres modes et formes de réalisation du procédé et de l'installation suivant l'invention sont indiqués dans les revendications annexées.

D'autres détails et particularités de l'invention ressortiront de la description donnée ci-après à titre non limitatif et avec référence aux dessins annexés.

La figure 1 représente une vue en perspective d'un dispositif d'injection suivant l'invention monté sur une cuve de brasserie.

La figure 2 représente de manière schématique une vue en plan d'une cuve dotée d'une variante de réalisation de dispositif d'injection suivant l'invention.

Sur les différents dessins, les éléments identiques ou analogues portent les mêmes références.

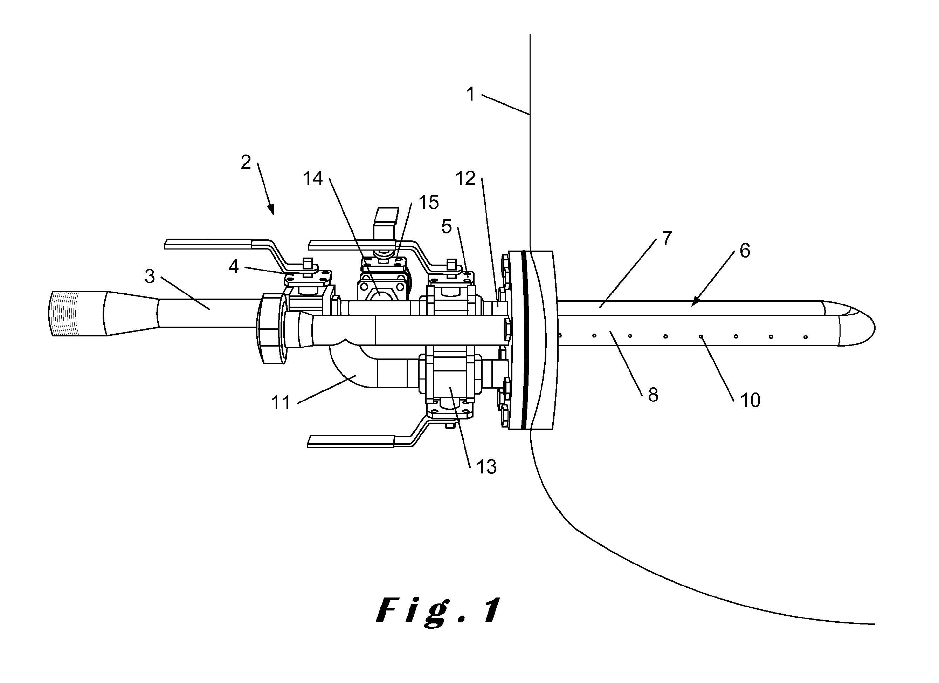

Ainsi qu'il ressort en particulier de la figure 1, l'installation de chauffage de produit de brasserie suivant l'invention comprend une cuve 1 contenant un produit de brasserie à chauffer. Cette cuve est munie de plusieurs dispositifs d'injection de vapeur d'eau 2, dont un seul est représenté. Chaque dispositif d'injection est alimenté en vapeur d'eau, par l'intermédiaire d'un conduit d'alimentation 3, depuis une source de vapeur d'eau non représentée, par exemple un générateur, qui est de préférence un générateur de vapeur propre, à basse pression, courant. Le conduit d'alimentation 3 est muni de deux organes d'arrêt, par exemple deux vannes 4 et 5. Ces vannes d'arrêt 4 et 5 en position d'ouverture autorisent un passage de vapeur d'eau dans le conduit d'alimentation 3 et elles ferment ce passage en position de fermeture.

Dans l'installation illustrée, les conduits d'alimentation 3 des dispositifs d'injection 2 sont agencés de manière à déboucher dans la partie inférieure ou moyenne de la cuve, de façon à injecter la vapeur d'eau directement dans le produit de brasserie à chauffer. De cette manière la vapeur d'eau transfère la chaleur résultant de sa condensation au produit de brasserie à chauffer, sans nécessiter un échange thermique au travers d'une paroi métallique. Cette technologie permet aussi d'éviter un encrassement des parois du fond de cuve par des dépôts caramélisés, comme dans les techniques usuelles.

L'injection de la vapeur d'eau directement dans le produit de brasserie se fait par l'intermédiaire d'un tube perforé 6, qui dans l'exemple illustré sur la figure 1, présente une forme de U. Une des branches 7 du U est raccordée au conduit d'alimentation 3 et l'autre branche 8 est reliée à la paroi de la cuve 1. Avantageusement les perforations présentent chacune un diamètre de 1 à 6 mm, de préférence de 2 à 4 mm. Ces perforations peuvent être en nombres variables et présenter divers modèles d'agencements, avec des diamètres partout identiques ou variables sur un même tube perforé.

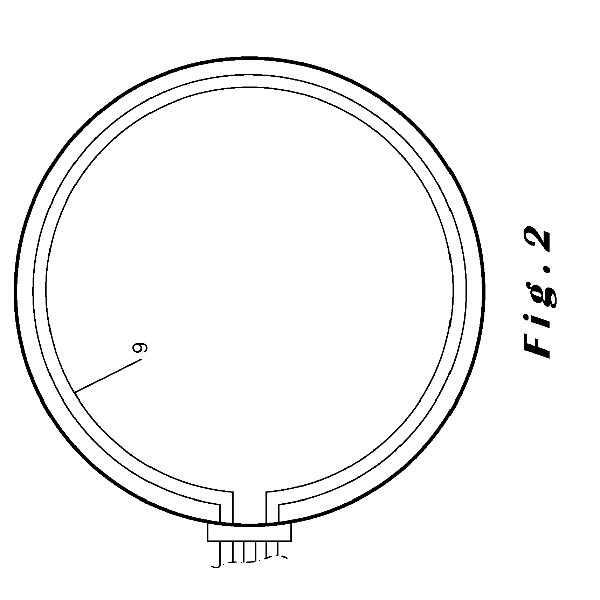

Le tube perforé 6 peut évidemment présenter différentes formes de réalisation dans la cuve. Par exemple on peut prévoir, comme représenté sur la figure 2, un seul dispositif d'injection et un tube perforé 9 circulaire qui effectue tout le pourtour de la cuve.

Le ou les tubes perforés 6 ou 9 peuvent être de n'importe quelle section , être réalisés en tout matériau approprié capable de présenter des perforations 10, par exemple en acier inoxydable, en matériau polymère, en réseau de fils métalliques, notamment de type Trislot^{®}.

Le dispositif d'injection 2 comprend en outre un conduit de dérivation 11 qui met en communication le tube perforé 6 avec l'intérieur de la cuve.

Dans l'exemple illustré, le tube perforé 6 présente une partie externe 12 qui est reliée au conduit d'alimentation en vapeur 3 et une partie interne formée des deux branches 7 et 8 du U. Celle-ci est en communication avec la partie externe 12 du tube perforé 6 en passant à travers la paroi de la cuve 1. La partie interne du tube perforé 6 est, à travers la paroi de la cuve 1, en communication avec le conduit de dérivation 11 à l'autre extrémité, c'est-à-dire par la branche 8 du U.

Le conduit de dérivation 11 est donc agencé à l'extérieur de la cuve. A son extrémité opposée à celle raccordée à la branche 8 du tube perforé 6, il est en communication directe avec l'intérieur de la cuve 1. Un organe de blocage 13, sous la forme d'une vanne dans l'exemple illustré, est prévu dans le conduit de dérivation 11. En position ouverte, il autorise un passage de liquide et/ou de vapeur dans le conduit de dérivation. En position fermée, il empêche celui-ci.

Le dispositif d'injection comporte aussi avantageusement un conduit de lavage 14 qui débouche dans le conduit d'alimentation en vapeur 3, entre les deux vannes d'arrêt 4 et 5. Ce conduit de lavage 14 est lui-même doté d'une vanne de retenue 15.

Avant le début de la chauffe du produit de brasserie, les vannes d'arrêt 4 et 5 et la vanne de retenue 14 sont en position de fermeture, tandis que la vanne de blocage 13 est amenée en position ouverte. Le dispositif d'injection se remplit alors du produit à chauffer puisqu'il est en communication directe avec le contenu de la cuve 1, par l'intermédiaire du conduit de dérivation 11. Le produit à chauffer est un produit de brasserie qui est un milieu liquide dans lequel des particules sont en suspension.

On ouvre ensuite les vannes d'arrêt 4 et 5, et de la vapeur basse pression est introduite dans le tube perforé 6. La vapeur injectée chasse le milieu liquide hors du dispositif d'injection par le conduit de dérivation 11 et le réintroduit ainsi dans la cuve 1, avec toutes les particules qu'il contient. Cette purge permet de bien nettoyer l'intérieur du tube perforé 6. Après cette purge, la vanne de blocage 13 est fermée. La vapeur introduite sous pression dans le tube perforé 6 doit à présent sortir par les perforations 10 de petit diamètre, ce qui permet un chauffage direct du produit de brasserie par contact avec de la vapeur d'eau d'une manière bien répartie dans la cuve. Une fois la température appropriée atteinte, les vannes d'arrêt 4 et 5 sont fermées et la vanne de blocage 13 est à nouveau ouverte. Du milieu liquide chauffé s'écoule alors à nouveau dans le conduit de dérivation et occupe la totalité du volume du dispositif d'injection. Cette opération empêche tout problème dû à la condensation de vapeur d'eau et notamment diminue l'effet de vide. Après avoir atteint un premier palier de température, la cuve est maintenue à celle-ci grâce par exemple au chemisage dans lequel peut circuler un milieu chauffant. Après une période d'abandon, pendant laquelle des enzymes appropriées agissent sur le produit de brasserie, les vannes d'arrêt 4 et 5 sont à nouveau réouvertes et la vapeur purge à nouveau le tube perforé et le conduit de dérivation, de façon à les nettoyer complètement. Le cycle peut ainsi se poursuivre comme décrit précédemment et on peut ainsi traiter des maisches qui doivent atteindre successivement des paliers de température de plus en plus élevés pour favoriser le travail des différentes enzymes.

Lors de la vidange de la cuve, une injection d'eau ou d'un produit de lavage peut s'effectuer dans le conduit de lavage 14 lorsque la vanne d'arrêt 4 est fermée, tandis que la vanne d'arrêt 5, la vanne de blocage 13 et la vanne de retenue 15 sont en position ouverte. Après ce lavage le dispositif d'injection est à nouveau propre et prêt pour un nouveau cycle.

Il doit être entendu que la présente invention n'est en aucune façon limitée aux formes et modes de réalisation décrits ci-dessus et que bien des modifications peuvent y être apportées sans sortir du cadre des revendications annexées.

On peut par exemple prévoir, avant injection de vapeur, de remplir le dispositif d'injection par un autre liquide que le produit de brasserie, par exemple par de l'eau, en ouvrant la vanne de retenue 15 alors que les vannes 4 et 13 sont en position fermée et la vanne 5 en position ouverte. Après fermeture de la vanne 14 et ouverture des vannes 4 et 13, on peut procéder à la purge initiale, puis à l'injection de vapeur dans le produit de brasserie avec la vanne 13 en position fermée, comme décrit précédemment. A la fin de l'injection de vapeur, on ferme la vanne 4 et maintient la vanne 13 en position fermée et la vanne 5 en position ouverte, tandis qu'on ouvre la vanne 15, ce qui permet de remplir à nouveau le dispositif d'injection par de l'eau.

On peut aussi prévoir, avant injection de vapeur et après celle-ci, un remplissage du dispositif d'injection à la fois par du produit de brasserie et de l'eau, et cela en ouvrant et fermant les vannes appropriées.

On peut aussi envisager, avant ou après chaque injection de vapeur, de remplir chaque dispositif d'injection par un gaz ou un mélange gazeux, par exemple du CO₂. Pour ce faire on prévoit alors par exemple parallèlement au conduit de lavage 14, d'une manière non représentée, un conduit d'alimentation en CO₂ obturable par une vanne propre. Cela permet de s'opposer efficacement à la création d'un vide dans le dispositif d'injection et d'éviter l'aspiration de particules risquant de boucher les perforations du dispositif d'injection.

## Revendications

1. Procédé de chauffage de produit de brasserie, comprenant
- une injection de vapeur d'eau à l'intérieur du produit de brasserie à traiter au travers d'au moins une perforation d'au moins un dispositif d'injection, et
- un arrêt de ladite injection, lorsque le produit de brasserie a atteint une température prédéterminée,
**caractérisé en ce qu'**il comprend en outre
- avant ladite injection, un remplissage dudit au moins un dispositif d'injection par un milieu fluide,
- en début d'injection, une purge initiale dudit milieu fluide hors de chaque dispositif d'injection par de la vapeur d'eau, par ouverture d'une dérivation permettant un passage de fluide entre le dispositif d'injection et la cuve, et
- une fermeture de chaque dérivation quand ledit au moins un dispositif d'injection est purgé.

2. Procédé suivant la revendication 1, **caractérisé en ce qu'**il comprend en outre,
à l'arrêt susdit de ladite injection ou après celui-ci, un nouveau remplissage dudit au moins un dispositif d'injection par ledit milieu fluide.

3. Procédé suivant l'une ou l'autre des revendications 1 et 2, **caractérisé en ce que** le milieu fluide susdit est le produit de brasserie et **en ce que** ledit remplissage est effectué par ouverture, à chaque dispositif d'injection, de ladite dérivation.

4. Procédé suivant l'une ou l'autre des revendications 1 et 2, **caractérisé en ce que** le milieu fluide susdit est de l'eau, **en ce que** ledit remplissage est effectué par ouverture, à chaque dispositif d'injection, d'une alimentation en eau, pendant que ladite dérivation est fermée, et **en ce que** la purge initiale a lieu après fermeture de l'alimentation en eau.

5. Procédé suivant l'une ou l'autre des revendications 1 et 2, **caractérisé en ce que** le milieu fluide est un mélange de produit de brasserie et d'eau, **en ce que** le remplissage est effectué par ouverture, à chaque dispositif d'injection, de ladite dérivation et d'une alimentation en eau, et **en ce que** la purge initiale a lieu après fermeture de l'alimentation en eau.

6. Procédé suivant l'une ou l'autre des revendications 1 et 2, **caractérisé en ce que** le milieu fluide est un gaz ou un mélange gazeux.

7. Procédé suivant l'une quelconque des revendications 1 à 6, **caractérisé en ce que**, après l'arrêt susdit de ladite injection de vapeur d'eau, le procédé comprend, à au moins une reprise, les étapes suivantes :
un maintien du produit de brasserie chauffé à un palier de température correspondant sensiblement à ladite température prédéterminée pendant une période de temps, puis,
après le remplissage susdit de chaque dispositif d'injection, une injection supplémentaire de vapeur d'eau dans le produit de brasserie, avec une purge initiale susdite de chaque dispositif d'injection, et
un arrêt de l'injection supplémentaire à une température plus élevée que ladite température prédéterminée.

8. Procédé suivant l'une quelconque des revendications 1 à 7, **caractérisé en ce que** le produit de brasserie est une maische, un moût, un extrait de malt ou un liquide à distiller.

9. Procédé suivant l'une quelconque des revendications 1 à 8, **caractérisé en ce que** la vapeur d'eau injectée présente une pression de 0,2 à 4 bar.

10. Installation de chauffage de produit de brasserie, comprenant
- une cuve (1) contenant le produit de brasserie à chauffer,
- au moins une source de vapeur d'eau située à l'extérieur de la cuve,
- au moins un dispositif d'injection (3) alimenté en vapeur d'eau par ladite au moins une source de vapeur d'eau et pourvu d'au moins une perforation (10) à travers laquelle la vapeur d'eau alimentée au dispositif d'injection (2) est injectée dans le produit de brasserie à chauffer, et
- au moins un organe d'arrêt (4, 5) qui, en position d'ouverture, autorise un passage de vapeur d'eau d'au moins une source de vapeur d'eau à au moins un dispositif d'injection et qui, en position de fermeture, arrête ce passage,
**caractérisé en ce que** chaque dispositif d'injection (2) comprend en outre
- une dérivation (11) mettant en communication celui-ci et la cuve, et
- un organe de blocage (13) de chaque dérivation (11)
qui, en position ouverte, autorise un passage de milieu liquide entre la cuve et le dispositif d'injection correspondant et inversement, et
qui, en position fermée, empêche ce passage.

11. Installation suivant la revendication 10, **caractérisée en ce qu'**au moins un dispositif d'injection susdit comporte un tube (6) qui, à l'extérieur de la cuve, présente une partie externe (12) en communication avec ladite source de vapeur d'eau et qui, à l'intérieur de la cuve, présente une partie interne pourvue d'une première extrémité en communication avec ladite partie externe (12), cette partie interne présentant ladite au moins une perforation (10) et ayant une forme de boucle qui est en communication avec ladite dérivation (11).

12. Installation suivant la revendication 11, **caractérisée en ce que** ladite partie interne du tube du dispositif d'injection est pourvue d'une deuxième extrémité opposée à ladite première extrémité, qui débouche vers l'extérieur de la cuve et **en ce que** ladite dérivation (11) est agencée à l'extérieur de la cuve de manière à mettre en communication cette deuxième extrémité et l'intérieur de la cuve.

13. Installation suivant l'une des revendications 11 et 12, **caractérisée en ce qu'**elle comprend un conduit de lavage (14) agencé sur chaque dispositif d'injection qui est capable d'alimenter celui-ci en liquide de lavage.
